# NEUE EUROPÄISCHE PATENTSCHRIFT

(11) **EP 0 803 178 B2**
(45) Veröffentlichungstag und Bekanntmachung des Hinweises auf die Entscheidung über den Einspruch: **13.12.2006**
(45) Hinweis auf die Patenterteilung: 20.10.1999
(21) Anmeldenummer: 97106501.6
(22) Anmeldetag: 19.04.1997
(51) Int. Cl.: A01D 21/00, A01D 33/14, A01D 17/22

(54) **Hackfruchterntemaschine**
Root crop harvester
Machine pour la récolte de tubercules

(30) Priorität: 27.04.1996 DE 29607677 U; 26.07.1996 DE 29613018 U
(43) Veröffentlichungstag der Anmeldung: 29.10.1997
(73) Patentinhaber: Rainer, Stephan, 94447 Plattling (DE)
(72) Erfinder: Rainer, Stephan, 94447 Plattling (DE)
(74) Vertreter: Wasmeier, Alfons

(56) Entgegenhaltungen:
- EP-A- 0 363 916
- DE-A- 4 228 584
- DE-C- 2 259 205
- DE-U- 8 908 916
- DE-U- 29 613 018

## Beschreibung

Die Erfindung betrifft eine Haddruchterntemaschine, insbesondere mehrreihig arbeitende, selbstfahrende Hackfruchterntemaschine nach Oberbegriff Patentanspruch 1.

Mehrreihig, insbesondere vierreihig arbeitende, selbstfahrende Kartoffelerntemaschinen sind in der Praxis mehrfach bekannt. Bei diesen Kartoffelerntemaschinen befindet sich die vordere Laufradachse stets vor der Dammaufnahmeeinrichtung, wodurch die vorderen Laufräder durch die ungerodeten Dämme laufen und in ihrer Breite stark beschränkt sind. Bei den bekannten Maschinen sind die Fördereinrichtungen zudem durch die hintere Laufradachse geführt, so daß der Gutstrom stark umgelenkt und verengt werden muß, was sich sehr nachteilig auf die Durchsatzleistung, den Reinigungseffekt und die Knollenbeschädigung auswirkt. Durch diese bekannten Anordnungen der Förder-und Reinigungseinrichtungen zwischen den Laufradachsen sind diese auch in ihrer Große und damit der Reinigungs- und Erdabscheideleistung stark eingeschränkt. Durch die bekannten Bauweisen können nur relativ kleine Laufräder montiert werden, die für größere Sammelbunker erforderlichen Tragfähigkeiten werden nicht erreicht und die Maschinen sind nur mit kleineren Zwischenbunkern ausgestattet.

Bei bekannten Kartoffelerntemaschinen befindet sich die Dammaufnahmeeinrichtung stets zwischen den Laufradachsen, und alle Dammaufnahmeorgane, wie Dammrollen, Scheibensech, Rodeschar und erstes Siebband sind in einem gemeinsamen Rahmen starr zueinander montiert. Durch diese starre Anordnung ist die Anpassungsfähigkeit der Dammaufhahmeeinrichtung an Bodenunebenheiten stark eingeschränkt und muß durch mehr Rodetiefe und damit erhöhte Erdreichaufnahme ausgeglichen werden. Weiterhin besteht durch die starre Anordnung von Dammaufnahmeeinrichtung und erstern Siebband meist keine Einstellmöglichkeit für den Anstellwinkel der Dammaufnahmeeinrichtung oder nur beschränkt auf die Rodeschar. Durch die bekannten Bauweisen ist es auch nicht möglich. Dammaufnahmeeinrichtung und Siebbänder In Querrichtung zueinander zu verstellen, wodurch die komplette Erntemaschine leicht schräg zur Fahrtrichtung gestellt werden könnte und der Abstand zur Anschlußreihe vergrößert würde.

Aus der EP-A-0 363 916 ist eine Rübenerntemaschine mit einer Blattschneideeinheit und einer nachlaufenden Rodeeinheit bekannt, zwischen deren Rodescharen jeweils Tasträder vorgesehen sind, mit denen die Eindringtiefe der Rodeschare gesteuert werden kann. Die Reinigung und Forderung erfolgt Ober Gliederbandförderer und über rotierende Siebsterne. Beide sind bodennah und unterhalb der Laufradachsen durch die Maschine hindurch nach rückwärts zu einer Überladeeinrichtung geführt, über die die Abgabe der gerodeten und gereinigten Rüben an den Bunker erfolgt.

Aufgabe der Erfindung ist es, die vorgenannten Nachteile zu vermeiden und eine mehrreihige, selbstfahrende Hackfruchterntemaschine, vorzugsweise Kartoffelerntemaschine, zu schaffen, bei der die Hackfruchtdämme vor der ersten Laufradachse aus der Gare aufgenommen werden, der Gutstrom in gleichbleibender Breite ohne Umlenkung über beide Laufradachsen nach hinten geführt wird, die Förder- und Reinigungseinrichtungen für höchste Rodeleistung ausgelegt sind und durch vier gleichgroße, angetriebene und lenkbare Laufräder genügend Tragfähigkeit für einen großen Hackfruchtsammelbunker vorhanden ist. Desweiteren ist es Aufgabe der Erfindung, die Dammaufnahmeeinrichtungen pro Reihe optimal einstellbar bzw. sich selbst anpassend auszuführen sowie Vorkehrungen zu schaffen, mit denen der Abstand der Laufradachsen zur Anschlußreihe vergrößert werden kann

Gemäß der Erfindung wird dies durch die Merkmale der Kennzeichnung des Patentanspruchs 1 erreicht.

Die Erfindung sieht vor, daß über den von den vorderen Laufrädern steil nach oben geführten Siebbändern ein Deckband angebracht ist, das ein Zurückrollen der Hackfrüchte verhindert.

In weiterer Ausgestaltung der Erfindung ist vorgesehen, zwischen dem ersten und zweiten Siebband ein kurzes Obergabeband anzubringen, das den Höhenunteschied zwischen dem ersten und dem zweiten Siebband ausgleicht so daß eine schonende Übergabe des Gutstromes erfolgt.

Gemäß der vorliegenden Erfindung werden die zweiten bzw. hinteren Siebbänder über die hintere Laufradachse geführt und beidseitig am hinteren Maschinenrahmenbereich angebracht, wodurch wiederum gewährleistet ist, daß ausreichend Förder- und Reinigungsfläche zur Verfügung steht und der Gutstrom nicht verengt werden muß.

Auch wird vorgeschlagen, den Gutstrom aus Hackfrüchten. Kraut und restlichen Kluten hinter der hinteren Laufradachse vom zweiten Siebband auf die Kraut- und Klutentrennorgane zu übergeben.

Die Erfindung sieht vor, den Fahrzeughauptirahmen mit einer Längspandelachse auszustatten, so daß die hinteren Siebbänder, die Kraut- und Klutentrennorgane, der Höhenförderer und der Sammelbunker gelenkig zur vorgelagerten Dammaufnahmeeinrichtung und den vorderen Siebbändern angebracht sind.

Die erfindungsgemäße Ausgestaltung der Hackfruchterntemaschine gestattet es, durch die Anbringung und Ansteuerung geeigneter Stellzylinder an der Längspendelachse des Fahrzeughauptrahmens und der Ausgestaltung der hinteren Laufradachse als Pendelachse, die hinteren Siebbänder, die Kraut- und Klutentrennorgane, den Höhenförderer sowie den Sammelbunker stets in der Waagerechten halten zu können. Dadurch ergibt sich eine gleichbleibende Verteilung des Gutstromes auf die Förder- und Reinigungseinrichtung sowie eine Erhöhung der Standfestigkeit beim Roden am Hang.

Mit der Erfindung wird ferner vorgeschlagen, daß der wechselnde Höhenunterschied zwischen den ersten und zweiten Siebbändern, bedingt durch das Auspendeln mittels Längspendelachse, durch die beiden drehbar gelagerten Übergabebänder stets ausgeglichen wird und ein schonender Transport des Gutstromes gewährleistet ist.

Bei einer weiteren Ausführungsform der Erfindung wird vorgeschlagen, daß die Dammaufnahmeeinrichtung vor der ersten Laufradachse angeordnet und über eine Aushubschwinge am Fahrzeugrahmen gelagert ist.

In weiterer Ausgestaltung der Erfindung ist die Dammaufnahmeeinrichtung und das nachfolgende erste Siebband in zwei voneinander unabhängige Einheiten aufgeteilt, so daß sich praktisch zwei separate Rode- und Siebbandkanäle ergeben.

Es wird ferner vorgeschlagen, daß die zur Dammaufnahmeeinrichtung gehörenden Organe wie Dammrolle, Scheibensech und Rodeschar und das nachfolgende erste Siebband jeweils in einem eigenen Rahmen gelagert und über eine Koppelstange und eine Seilaufhängung beweglich miteinander verbunden sind.

In weiterer Ausgestaltung der Erfindung sind die Rahmen der Dammaufnahmeeinrichtungen über drei Lenker (zwei Unter- und ein Oberlenker) an der Aushubschwinge so beweglich angelenkt, daß die Dammaufnahmeeinrichtungen gezogen, in der Höhe variabel und quer zum Kartoffeldamm pendelnd sind. Durch die Verwendung von einstellbaren Oberlenkern können die Dammaufnahmeeinrichtungen in ihrem Anstellwinkel einfach den Rodebedingungen angepaßt werden.

Damit ist es möglich, mittels der an den Unterlenkern und an der Aushubschwinge befestigten hydraulischen Hubzylinder den Auflagedruck der Dammaufnahmeeinrichtungen auf den Hackfrüchtedamm durch entsprechende Druckbeaufschlagung der Zylinder zu regulieren und den Erntebedingungen anzupassen.

Die erfindungsgemäße Ausgestaltung der Hackfruchterntemaschine gestattet es, daß durch eine kleine Drehung der Dammaufnahmeeinrichtungen quer zum ersten Siebband und der ganzen Maschine beim Roden die komplette Hackfruchterntemaschine leicht schräg fährt und sich dadurch der Abstand der Laufradachsen zu dem ungerodeten Anschlußdamm vergrößert. Durch die geteilten Dammaufnahmeeinrichtungen und die dazu beweglich angeordneten ersten Siebbänder verändert sich der Abstand zwischen Rodeschar und Siebband nur unwesentlich, so daß der Gutstrom nicht beeinträchtigt wird. Beim An- bzw. Durchroden bleiben die Dammaufnahmeeinrichtungen geradegestellt.

Die Erfindung erstreckt sich nicht nur auf die Merkmale der einzelnen Ansprüche, sondern auch auf deren Kombination.

Nachstehend wird die Erfindung in Verbindung mit der Zeichnung anhand von Ausführungsbeispielen erläutert Es zeigt:
- Fig. 1: schematisch in Seitenansicht eine mehrreihige, selbstfahrende Hackfruchterntemaschine in Form einer Kartoffelerntemaschine,
- Fig. 2: schematisch in einer Teilaufsicht auf die Darstellung nach Fig. 1 die Anordnung der Dammaufnahmeeinrichtung, der vorderen und hinteren Siebbänder, Übergabebänder und Kraut- und Klutentrennorgane mit Kartoffelhöhenförderer im Schnitt,
- Fig. 3: schematisch den Fahrzeugrahmen mit Längspendelachse und den Verlauf von vorderem und hinterem Siebband mit Übergabeband,
- Fig. 4: den Fahrzeugrahmen gemäß Fig. 3 im Schnitt durch die Langspendelachse,
- Fig. 5: schematisch in Seitenansicht eine andere Ausführungsform einer mehrreihigen, selbstfahrenden Hackfruchterntemaschine in Form einer Kartoffelerntemaschine,
- Fig. 6: schematisch in Seitenansicht einer Teilaufsicht die Anordnung der Dammaufnahmeeinrichtungen und der nachfolgenden Siebbänder,
- Fig. 7: schematisch die Dammaufnahmeeinrichtungen in Seitenansicht, mit Aushubschwinge, Siebband und Dreipunktanlenkung mit Entlastungszylinder, und
- Fig. 8: die Dammaufnahmeeinrichtungen in Aufsicht mit Anbindung über die schwenkbare Aushubschwinge an das Maschinenfahrgestell.

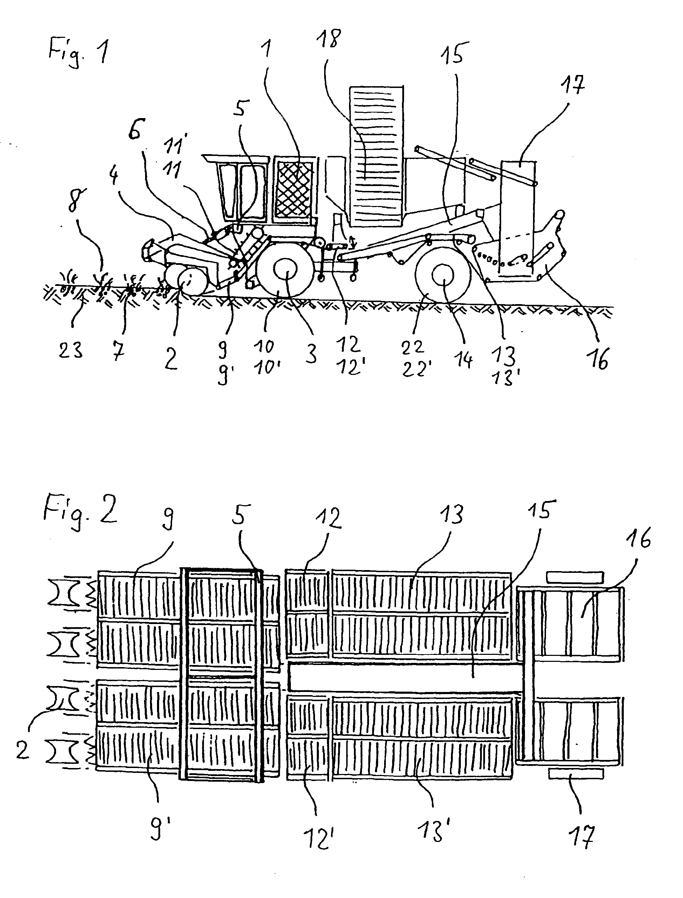

Fig. 1 zeigt in Seitenansicht in schematischer Darstellung eine selbstfahrende Kartoffelerntemaschine 1, die über vordere Laufräder 10, 10' auf einer vorderen Laufrad-achse 3 sowie über hintere Laufräder 22, 22' auf einer hinteren Laufradachse 14 auf dem Boden abgestützt ist im Bereich vor der vorderen Laufradachse 3 ist die Dammaufnahmeeinrichtung 2 verbunden zum Hauptrahmen 5 über die Schwinge 4 angeordnet und kann mit den Hubzylindern 6 ausgehoben werden. Die Kartoffeln 7 mit Kraut 8 und Erdreich 23 werden über die Dammaufnahmeeinrichtung 2 aufgenommen und durch das vordere Siebband 9, 9' weitergefördert.

Durch die spezielle Ausgestaltung des Siebbandverlaufes des vorderen Siebbandes 9, 9' wird der Gutstrom aus Kartoffeln 7, Kraut 8 und Erdreich 23 in gleichbleibender Breite über die erste Laufradachse 3 bzw. die vorderen Laufräder 10, 10' gefördert.

Über dem vorderen Siebband 9, 9' ist ein Deckband 11 im steil ansteigenden Bereich des Siebbandes 9, 9' vor den vorderen Laufrädern 10, 10' angeordnet. Ein Zurückrollen der Kartoffeln in diesem Bereich wird auf diese Weise verhindert und eine kurze Bauweise ermöglicht.

Anschließend an das vordere Siebband 9, 9', das aus zwei einzelnen Bändern 9 und 9' (siehe Fig. 2) besteht, sind die Übergabebänder 12, 12' angeordnet, die den Gutstrom schonend und die Fallhöhe ausgleichend auf das hintere Siebband 13, 13' übergeben. Das hintere Siebband 13, 13' besteht aus zwei einzelnen Bändern 13 und 13', die zu beiden Seiten des hinteren Maschinenrahmenbereichs 15 angeordnet sind und verlaufen über der hinteren Laufradachse 14 bzw. den hinteren Laufrädern 22, 22' verlaufen. Der Gutstrom verläuft dadurch in praktisch gleichbleibender Breite über die ganze Maschinenlänge und über alle Laufräder nach hinten in die Kraut- und Kluterttrennorgane 16. Durch diese Ausbildung ist eine optimale Auslegung der Siebbänder 9, 9', 13, 13'bezüglich Förderkapazität und Reinigungswirkung gewährleistet.

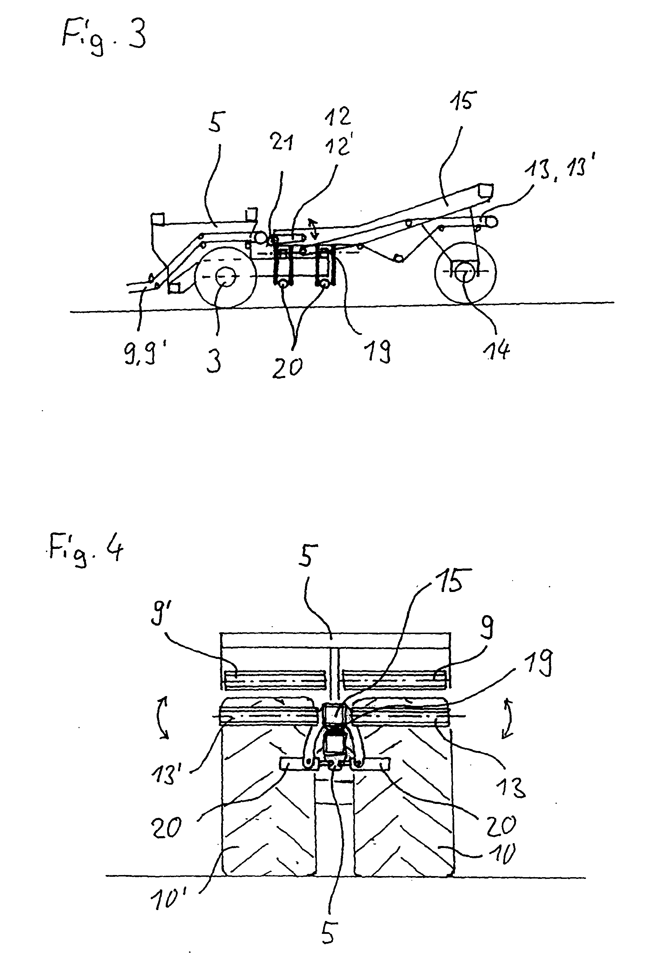

In einer weiteren Ausgestaltung nach Fig. 3 besteht der Fahrzeugrahmen der Kartoffelerntemaschine 1 aus einem vorderen Hauptrahmen 5 und einem hinteren Maschinenrahmenbereich 15, die über die Längspendelachse 19 verbunden sind. Durch die in Fig. 4 gezeigte Anbringung von Stellzylindern 20 und der als Pendelachse ausgeführten hinteren Laufradachse 14 ist es möglich, den hinteren Maschinenrahmenbereich 15 quer zur Fahrtrichtung zu verstellen.

Zusammen mit der erfindungsgemäßen Anordnung der hinteren Siebbänder 13, 13', der Kraut- und Klutentrennorgane 16, des Kartoffelhtihenförderers 17 und des Kartoffelsammelbunkers 18 am hinteren Maschinenrahmenbereich 15 können diese leistungsbestimmenden Organe beim Roden am Seitenhang stets in der Waagerechten gehalten werden.

Mit einer dem technischen Standard entsprechenden Steuerelektronik kombiniert entsteht eine automatisierte Niveauregulierung für den Seitenhang, die eine optimale Rodeleistung und erhöhte Standfestigkeit gewährleistet.

Der wechselnde Höhenunterschied zwischen den vorderen Siebbändern 9, 9' und den hinteren Siebbändern 13, 13' beim Roden an Seitenhängen wird dadurch ausgeglichen, daß die beiden Übergabebänder 12, 12', wie in Fig. 3 gezeigt, drehbar um die Achse 21 gelagert sind und sich entsprechend anpassen.

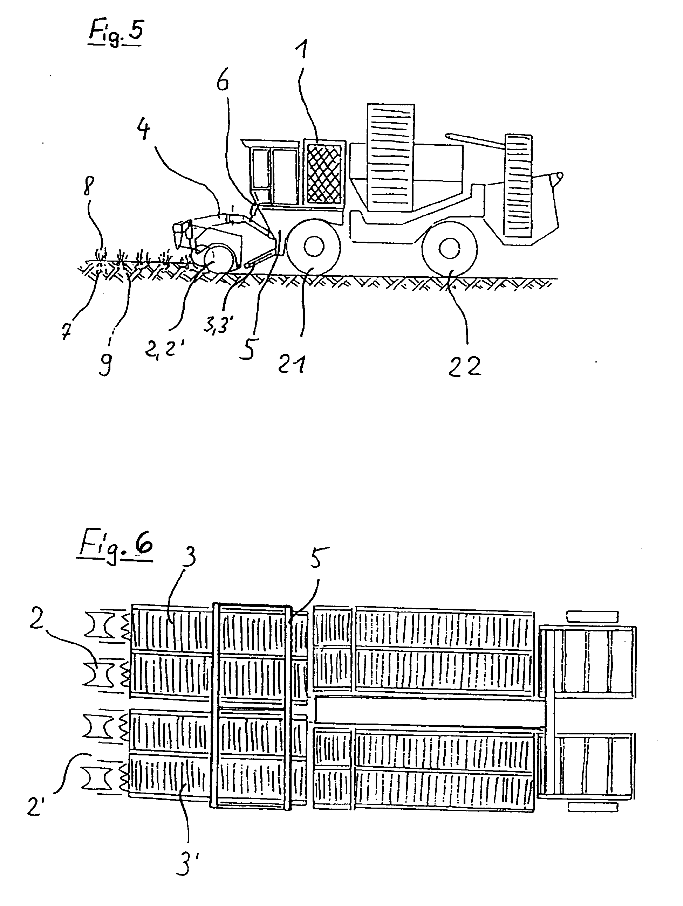

Die Figuren 5 - 8 zeigen in Seitenansicht und Aufsicht in schematischer Darstellung einer anderen Ausführungsform einer selbstfahrenden Kartoffelerntemaschine. In diesen Figuren sind für gleiche Teile die gleichen Bezugszeichen wie in den Figuren 1 - 4 verwendet. Die Kartoffelerntemaschine 1 ist über eine vordere Laufradachse 3 und eine hintere Laufradachse 22 auf dem Boden abgestützt ist. Im Bereich vor der vorderen Laufradachse 3 sind die Dammaufnahmeeinrichtungen 2, 2' an der Aushubschwinge 4 angeordnet, die selbst wiederum am Maschinenrahmen 5 gelagert ist und mit Hilfe der Hubzylinder 6 ausgehoben werden kann. Der Gutstrom aus Kartoffeln 7, Kraut 8 und Erdreich 23 wird durch die Dammaufnahmeeinrichtungen 2, 2' aufgenommen und über die ersten Siebbänder 9, 9' in die Hackfruchterntemaschine 1 weitergefördert.

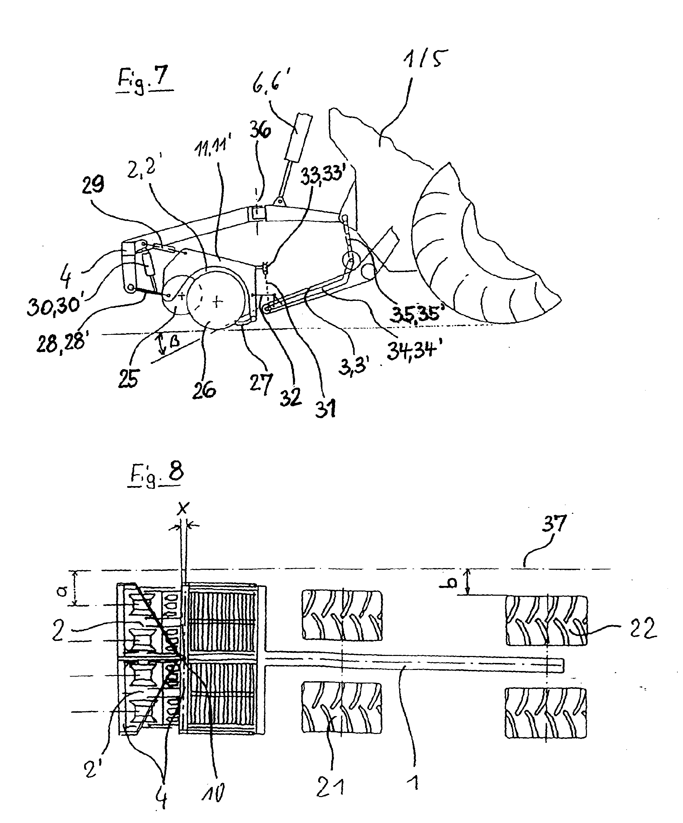

Aus der Aufsicht der Fig. 6 wird ersichtlich, daß sich die Dammaufnahme bei vier Reihen auf zwei geteilte, voneinander unabhängige Dammaufnahmeeinrichtungen 2, 2' sowie die nachfolgenden ersten Siebbänder 9, 9' verteilt. Durch diese Aufteilung wird es konstruktiv möglich, die Dammaufnahmeeinrichtungen 2, 2' so variabel anzubinden, daß sie optimal an die Erntebedingungen angepaßt werden können bzw. sich selbst einstellend sind.

Entsprechend Fig. 7 bestehen die Dammaufnahmeeinrichtungen 2,2' jeweils aus dem Rahmen 24, 24', an dem die Dammaufnahmeorgane, je zwei Dammrollen 25, vier Scheibenseche 26 und zwei Rodeschare 27 montiert sind und die Dammaufnahme für zwei Reihen bilden. Die Dammaufnahmeeinrichtungen 2, 2' werden jeweils über die Unterlenker 28, 28' sowie einem verstellbaren Oberlenker 29 an die Aushubschwinge 4 angebunden, so daß diese beim Roden gezogen werden. Mittels der zwischen Aushubschwinge 4 und Unterlenkern 28, 28' angebrachten Hydraulikzylinder 30, 30' kann die jeweilige Dammaufnahmeeinrichtung 2, 2' in ihrem Auflagedruck auf den Kartoffeldamm durch entsprechende Druckbeaufschlagung der Zylinder 30, 30' eingestellt werden. Beim Ausheben der kompletten Rodeeinheit werden die Zylinder 30, 30' blockiert und die Dammaufnahmeeinrichtungen 2, 2' mit den Siebbändern 3, 3' werden über die Aushubschwinge 4 und die Hubzylinder 6, 6' angehoben.

Durch den in der Länge verstellbaren Oberlenker 29 und die gelenkige Anbindung der Siebbänder 3, 3' an die jeweilige Dammaufnahmeeinrichtung 2, 2' läßt sich der Anstellwinkel β der Dammaufnahmeeinrichtungen 2, 2' leicht einstellen. Die gelenkige Anbindung der Siebbänder 3, 3' an die Dammaufnahmeeinrichtungen 2, 2' erfolgt über eine Seilaufhängung 31 und eine, jeweils nur an einer Seite angebrachten Koppelstange 32, die auch als Kulissenführung dargestellt werden könnte. Die Seilaufhängung 31 läuft über die zwei Umlenkrollen 33, 33' und gleicht damit Querpendelbewegungen der Dammaufnahmeeinrichtungen 2, 2' aus. Die Koppelstange 32 bindet die Siebbänder 3, 3' in Längsrichtung an. Zur Hackfruchterntemaschine 1 und deren Hauptrahmen 5 hin werden die Siebbandrahmen 34, 34' durch eine Zwischenschwinge 35, 35' abgestützt.

Zusammen mit der erfindungsgemäßen Anordnung aller Dammaufnahmeorgane und dem vertikalen Drehgelenk 36 in der Aushubschwinge 4 wird es möglich, die Dammaufnahmeeinrichtungen 2, 2' leicht schräg zu stellen.

In Fig. 8 wird gezeigt, daß durch die leichte Drehung x der Dammaufnahmeeinrichtungen 2, 2' sich die ganze Hackfruchterntemaschine 1 um den Winkel x schräg zur Fahrt-bzw. Roderichtung stellt. Dadurch vergrößert sich der Abstand b der hinteren Laufradachse 22 zum Anschlußdamm 37 entsprechend dem Drehwinkel x und dem Hebelverhältnis, halbe Maschinenbreite zum Abstand Drehgelenk 36 / Mittel hinterer Laufradachse 22. Mittels der Lenkbarkeit beider Laufradachsen 3 und 22 kann die Schrägstellung ausgeglichen werden.

Der vergrößerte Abstand b wirkt sich vor allem beim Roden am Hang und in Kurven vorteilhaft aus, da beim Abdriften der Maschine bzw. bei Lenkbewegungen nicht gleich der Anschlußdamm 37 der im Abstand a gepflanzten Kartoffeln angefahren wird.

Zum Durch- bzw. Anroden von Kartoffelschlägen werden die Dammaufnahmeeinrichtungen 2, 2' gerade gestellt. Die Verstellung erfolgt über geeignete Stellzylinder an der drehbaren Aushubschwinge 4.

## Patentansprüche

1. Mehrreihig arbeitende, selbstfahrende Hackfruchterntemaschine, vorzugsweise Kartoffelerntemaschine, mit mindestens einer vorderen und einer hinteren Laufradachse (3, 14) mit gleich großen, antreibbaren und lenkbaren Laufrädern (10, 10'; 22, 22'), einer Dammaufnahmeeinrichtung (2, 2'), einer der Dammaufnahmeeinrichtung (2, 2') nachgeschalteten Förder- und Reinigungseinrichtung mit zwei vorderen Siebbändern (9') und zwei hinteren Siebbändern (13, 13'), einem Höhenförderer und einem Sammelbunker (18), wobei die Dammaufnahmeeinrichtung (2, 2') vor der vorderen Laufradachse (3) der Erntemaschine angeordnet und über eine Schwinge (4) mit einem Hauptrahmen (5) verbunden sowie mittels Schwinge (4) und beidseitig angeordneten hydraulischen Hubzylindern (6) anhebbar ausgebildet ist, und wobei die Hackfrüchte (7) samt Kraut (8) und Erdreich (23) über die Dammaufnahmeeinrichtung (2, 2') von den beiden vorderen Siebbändern (9, 9') durch die gesamte Rodebreite aufgenommen werden, wobei die Hackfrüchte (7) samt Kraut (8) und Erdreich (23) in gleichbleibender Breite über die beiden Laufräder (10, 10') der vorderen Laufradachse (3) gefördert werden, **dadurch gekennzeichnet,**
**daß** gegen das Zurückrollen der Hackfrüchte (7) im steilen Bereich der vorderen Siebbänder (9, 9') vor den vorderen Laufrädern (10, 10') eine Steighilfe in Form eines Deckbandes (11, 11') angebracht ist, und
**daß** die hinteren Siebbänder (13, 13'), Kraut- und Klutentrennorgane (16), der Höhenförderer (17) und der Sammelbunker (18) über einen hinteren Maschinenrahmen (15) und eine Rahmenlängspendelachse (19) gelenkig zum Hauptrahmen (5), den vorderen Siebbändern (9, 9') und der Dammaufnahmeeinrichtung (2, 2') gelagert sind.

2. Hackfruchterntemaschine nach Anspruch 1, **dadurch gekennzeichnet, daß** die Hackfrüchte (7) mit Kraut (8) durch Übergabebänder (12, 12') auf die beiden hinteren Siebbänder (13, 13') gefördert werden.

3. Hackfruchterntemaschine nach Anspruch 1 oder 2, **dadurch gekennzeichnet, daß** die beiden hinteren Siebbänder (13, 13') über der hinteren Laufradachse (14) und beidseits des hinteren Maschinenrahmenbereichs (15) angebracht sind.

4. Hackfruchterntemaschine nach einem der Ansprüche 1 - 3, **dadurch gekennzeichnet, daß** die Hackfrüchte (7) mit Kraut (8) hinter der hinteren Laufradachse (14) von den Siebbändern (13, 13') auf die Kraut- und Klutentrennorgane (16) übergeben werden.

5. Hackfruchterntemaschine nach einem der Ansprüche 1-4, **dadurch gekennzeichnet, daß** über Stellzylinder (20) und die Rahmenlängspendelachse (19) die hinteren Siebbänder (13, 13'), die Kraut- und Klutentrennorgane (16), der Höhenförderer (17) und der Sammelbunker (18) während des Rodevorgangs (z.B. am Hang) stets in der Waagerechten gehalten werden.

6. Hackfruchterntemaschine nach einem der Ansprüche 1 - 5, **dadurch gekennzeichnet, daß** der durch die Rahmenlängspendelachse (19) wechselnde Höhenunterschied zwischen den vorderen Siebbändern (9, 9') und den hinteren Siebbändern (13, 13') durch die um die vordere Achse drehbar gelagerten Übergabebänder (12, 12') ausgeglichen wird.

7. Hackfruchterntemaschine nach Anspruch 1, **dadurch gekennzeichnet, daß** die Dammaufnahmeeinrichtungen (2, 2') mit den nachfolgenden Förderorganen, den Siebketten (3, 3') voneinander getrennt an der Aushubschwinge (4) und dem Hauptrahmen (5) angeordnet sind.

8. Hackfruchterntemaschine nach Anspruch 7, **dadurch gekennzeichnet, daß** die Rahmen (24, 24') der Dammaufnahmeeinrichtung (2, 2'), bestehend aus Dammrolle (25), Scheibensech (26) und Rodeschar (27), und die Rahmen (22, 22') der Siebketten (3, 3') über eine Koppelstange (32) und Seilaufhängung (20) zueinander beweglich angeordnet sind.

9. Hackfruchterntemaschine nach Anspruch 8, **dadurch gekennzeichnet, daß** die Dammaufnahmeeinrichtungen (2, 2') jeweils über die Unterlenker (15, 15') und über den verstellbaren Oberlenker (16) so an die Aushubschwinge (4) angebunden sind, daß die Dammaufnahmeeinrichtungen (2, 2') gezogen werden.

10. Hackfruchterntemaschine nach einem der Ansprüche 8 oder 9, **dadurch gekennzeichnet, daß** die Dammaufnahmeeinrichtungen (2, 2') über die Hydraulikzylinder (17, 17') anhebbar bzw. entlastbar ausgebildet sind, damit der Auflagedruck der Dammrollen (12) auf dem Damm (9) reguliert werden kann.

11. Hackfruchterntemaschine nach einem der Ansprüche 8 - 10, **dadurch gekennzeichnet, daß** die an der Aushubschwinge (4) angebrachten Dammaufnahmeeinrichtungen (2, 2') mit Hilfe des Drehgelenks (10) in der Aushubschwinge (4) zu den Siebbändern (3, 3') und somit zur ganzen Maschine (1) leicht um den Winkel (X) drehbar angeordnet sind.

## Claims

1. Self-propelling root crop harvester, operating over a number of rows, preferably potato harvester, with at least one front and one rear running-wheel axle (3, 14) having driveable and steerable running wheels (10, 10'; 22, 22') of the same size, a ridge-picking-up device (2, 2'), a conveying and cleaning device which is connected downstream of the ridge-picking-up device (2, 2') and has two front sifting belts (9') and two rear sifting belts (13, 13'), a vertical conveyor and a collecting bin (18), the ridge-picking-up device (2, 2') being arranged in front of the front running-wheel axle (3) of the harvester and being connected to a main frame (5) via a rocker (4) and being designed such that it can be raised by means of the rocker (4) and hydraulic lifting cylinders (6) arranged on both sides, and the root crops (7) together with weeds (8) and soil (23) being picked up across the entire potato-lifting width by the two front sifting belts (9, 9') via the ridge-picking-up device (2, 2'), the root crops (7) together with weeds (8) and soil (23) being conveyed at a constant width over the two running wheels (10, 10') of the front running-wheel axle (3), **characterized in that** a climbing aid in the form of a conveyer belt (11, 11') is fitted to prevent the root crops (7) from rolling back in the steep region of the front sifting belts (9, 9') in front of the front running wheels (10, 10'), and **in that** the rear sifting belts (13, 13'), weed and clod separators (16), the vertical conveyor (17) and the collecting bin (18) are mounted in an articulated manner with respect to the main frame (5), the front sifting belts (9, 9') and the ridge-picking-up device (2, 2') via a rear machine frame (15) and a frame longitudinal swing axle (19).

2. Root crop harvester according to Claim 1, **characterized in that** the root crops (7) together with weeds (8) are conveyed to the two rear sifting belts (13, 13') by transfer belts (12, 12').

3. Root crop harvester according to Claim 1 or 2, **characterized in that** the two rear sifting belts (13, 13') are fitted over the rear running-wheel axle (14) and on both sides of the rear machine frame region (15).

4. Root crop harvester according to one of Claims 1 - 3, **characterized in that** the root crops (7) together with weeds (8) are transferred behind the rear running-wheel axle (14) by the sifting belts (13, 13') to the weed and clod separators (16).

5. Root crop harvester according to one of Claims 1 - 4, **characterized in that** the rear sifting belts (13, 13'), the weed and clod separators (16), the vertical conveyor (17) and the collecting bin (18) are always kept horizontal during the potato-lifting operation (for example on a slope) via adjusting cylinders (20) and the frame longitudinal swing axle (19).

6. Root crop harvester according to one of Claims 1 - 5, **characterized in that** the difference in height, which changes by means of the frame longitudinal swing axle (19), between the front sifting belts (9, 9') and the rear sifting belts (13, 13') is compensated for by the transfer belts (12, 12') which are mounted rotatably about the front axle.

7. Root crop harvester according to Claim 1, **characterized in that** the ridge-picking-up devices (2, 2') are arranged, with the following conveying elements, the sifting chains (3, 3') separately from each other, on the excavation rocker (4) and the main frame (5).

8. Root crop harvester according to Claim 7, **characterized in that** the frames (24, 24') of the ridge-picking-up device (2, 2'), comprising ridge roller (25), disc coulter (26) and lifting share (27), and the frames (22, 22') of the sifting chains (3, 3') are arranged moveably with respect to one another via a coupling rod (32) and cable suspension (20).

9. Root crop harvester according to Claim 8, **characterized in that** the ridge-picking-up devices (2, 2') are connected in each case via the lower links (15, 15') and via the adjustable upper links (16) to the excavation rocker (4) in such a manner that the ridge-picking-up devices (2, 2') are pulled.

10. Root crop harvester according to either of Claims 8 and 9, **characterized in that** the ridge-picking-up devices (2, 2') are designed such that they can be raised or freed of load via the hydraulic cylinders (17, 17'), so that the bearing pressure of the ridge rollers (12) on the ridge (9) can be regulated.

11. Root crop harvester according to one of Claims 8 - 10, **characterized in that** the ridge-picking-up devices (2, 2'), which are fitted to the excavation rocker (4), are arranged such that they can easily be rotated with respect to the sifting belts (3, 3') and therefore with respect to the entire machine (1) through the angle (X) with the aid of the rotary joint (10) in the excavation rocker (4).

## Revendications

1. Machine autotractée pour récolter des tubercules opérant sur plusieurs rangées, de préférence machine pour récolter des pommes de terre, comprenant au moins un essieu de roue avant et un essieu de roue arrière (3, 14) avec des roues (10, 10'; 22, 22') entraînables et orientables de même grandeur, un dispositif de ramassage de billon (2, 2'), un dispositif de convoyage et de nettoyage placé après le dispositif de ramassage de billon (2, 2') et comprenant deux bandes de criblage avant (9') et deux bandes de criblage arrière (13, 13'), un élévateur et une trémie collectrice (18), dans laquelle le dispositif de ramassage de billon (2, 2') est disposé devant l'essieu de roue avant (3) de la machine de récolte et est relié à un châssis principal (5) par l'intermédiaire d'un culbuteur (4) et est configuré de manière à pouvoir être soulevé au moyen du culbuteur (4) et de vérins hydrauliques (6) disposés des deux côtés, et dans laquelle les tubercules (7) sont reçus avec les herbes (8) et la terre (23) sur toute la largeur d'arrachage par les deux bandes de criblage avant (9, 9') en passant par le dispositif de ramassage de billon (2, 2'), les tubercules (7) étant acheminés avec les herbes (8) et la terre (23) sur une largeur constante au-dessus des deux roues (10, 10') de l'essieu de roue avant (3), **caractérisée en ce qu'**un élément auxiliaire ascendant sous la forme d'une bande de couverture (11, 11') est placé dans la zone en pente des bandes de criblage avant (9, 9') devant les roues avant (10, 10') pour empêcher le roulement vers l'arrière des tubercules (7) et **en ce que** les bandes de criblage arrière (13, 13'), les organes de séparation d'herbes et de mottes (16), l'élévateur (17) et la trémie collectrice (18) sont montés de manière articulée par rapport au châssis principal (5), aux bandes de criblage avant (9, 9') et au dispositif de ramassage de billon (2, 2') au-dessus d'un châssis arrière (15) de la machine et d'un essieu oscillant longitudinal (19) du châssis.

2. Machine pour récolter des tubercules selon la revendication 1, **caractérisée en ce que** les tubercules (7) sont acheminés avec les herbes par les bandes de transfert (12, 12') sur les deux bandes de criblage arrière (13, 13').

3. Machine pour récolter des tubercules selon la revendication 1 ou 2, **caractérisée en ce que** les deux bandes de criblage arrière (13, 13') sont montées au-dessus de l'axe de roue arrière (14) et des deux côtés de la zone arrière (15) du châssis de la machine.

4. Machine pour récolter des tubercules selon l'une des revendications 1 à 3, **caractérisée en ce que** les tubercules (7) sont transférés avec les herbes (8) sur les organes de séparation des herbes et des mottes (16) par les bandes de criblage (13, 13') derrière l'essieu de roue arrière (14).

5. Machine pour récolter des tubercules selon l'une des revendications 1 à 4, **caractérisée en ce que** les bandes de criblage arrière (13, 13'), les organes de séparation des herbes et des mottes (16), l'élévateur (17) et la trémie collectrice (18) sont toujours maintenus à l'horizontale pendant le processus d'arrachage (par exemple, sur les versants) par des cylindres de réglage (20) et l'essieu oscillant longitudinal (19) du châssis.

6. Machine pour récolter des tubercules selon l'une des revendications 1 à 5, **caractérisée en ce que** la différence de hauteur entre les bandes de criblage avant (9, 9') et les bandes de criblage arrière (13, 13') qui change du fait de l'essieu oscillant longitudinal (19) du châssis est compensée par les bandes de transfert (12, 12') placées de manière à tourner autour de l'essieu avant.

7. Machine pour récolter des tubercules selon la revendication 1, **caractérisée en ce que** les dispositifs de ramassage de billon (2, 2') avec les organes de convoyage qui les suivent et les chaînes de criblage (3, 3') sont disposés séparément les uns des autres sur le culbuteur d'extraction (4) et le châssis principal (5).

8. Machine pour récolter des tubercules selon la revendication 7, **caractérisée en ce que** les châssis (24, 24') du dispositif de ramassage de billon (2, 2') constitué d'un rouleau de billon (25), d'un coutre circulaire (26) et d'un soc d'arrachage (27), et les châssis (22, 22') des chaînes de criblage (3, 3') sont disposées de manière mobile les uns par rapport aux autres au moyen de la barre de couplage (32) et de la suspension par câble (20).

9. Machine pour récolter des tubercules selon la revendication 8, **caractérisée en ce que** les dispositifs de ramassage de billon (2, 2') sont respectivement reliés au culbuteur d'extraction (4) par des bras oscillants inférieurs (15, 15') et par des bras oscillants supérieurs (16) réglables de telle manière que les dispositifs de ramassage de billon (2, 2') soient tirés.

10. Machine pour récolter des tubercules selon la revendication 8 ou 9, **caractérisée en ce que** les dispositifs de ramassage de billon (2, 2') sont configurés de manière à être pouvoir être soulevés ou encore libérés afin que la pression d'appui des rouleaux de billon (12) sur le billon (9) puisse être régulée.

11. Machine pour récolter des tubercules selon l'une des revendications 8 à 10, **caractérisée en ce que** les dispositifs de ramassage de billon (2, 2') montés à l'aide de l'articulation tournante (10) dans le culbuteur d'extraction (4) sont disposés de manière à tourner aisément de l'angle (X) par rapport aux bandes de criblage (3, 3') et donc à toute la machine (1).
